(19) Europäisches Patentamt / European Patent Office / Office européen des brevets

(11) **EP 3 072 225 B1**

(12) **FASCICULE DE BREVET EUROPEEN**

(45) Date de publication et mention
de la délivrance du brevet:
**06.05.2020 Bulletin 2020/19**

(51) Int Cl.:
*H02K 37/14* (2006.01)  *H02K 1/14* (2006.01)
*H02K 3/18* (2006.01)  *H02K 3/52* (2006.01)

(21) Numéro de dépôt: **14798830.7**

(22) Date de dépôt: **13.11.2014**

(86) Numéro de dépôt international:
**PCT/EP2014/074459**

(87) Numéro de publication internationale:
**WO 2015/074940 (28.05.2015 Gazette 2015/21)**

(54) **MOTEUR ELECTRIQUE**

ELEKTROMOTOR

ELECTRIC MOTOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.11.2013 EP 13193577**

(43) Date de publication de la demande:
**28.09.2016 Bulletin 2016/39**

(73) Titulaire: **Société Industrielle de Sonceboz S.A.
2605 Sonceboz (CH)**

(72) Inventeurs:
• **DEXET, Christophe
25450 Damprichard (FR)**
• **POINCEAU, Hubert
2502 Bienne (CH)**

(74) Mandataire: **reuteler & cie SA
Chemin de la Vuarpillière 29
1260 Nyon (CH)**

(56) Documents cités:
**JP-A- 2002 315 295    JP-A- 2011 223 776
JP-A- 2013 118 749    US-A1- 2002 135 243
US-A1- 2005 218 730    US-A1- 2009 001 824**

**Description**

La présente invention concerne le domaine des moteurs électriques et notamment les moteurs électriques plats, par exemple pour des applications dans le domaine des dispositifs médicaux.

Des moteurs électriques plats sont décrits par exemple dans les publications de brevets et demandes de brevets US5708406, US8084913, EP1482626 US2010/314962. Des moteurs avec une armature magnétique formant le circuit magnétique où les noyaux de bobines sont rapportés sont connus et décrits par exemple dans US2009/0001824, US2002/0135243, JP2002-315295A ou dans JP2011-223776A.

La densité de couple des moteurs plats connus est insuffisant pour certaines applications et/ou le moteur est couteux à fabriquer et/ou pas suffisamment fiable. Un objet de l'invention est de fournir un moteur électrique compact, performant et fiable.

Il est avantageux de fournir un moteur électrique plat ayant une grande densité de couple pour sa taille.

Il est avantageux de fournir un moteur électrique ayant un haut rendement.

Il est avantageux de fournir un moteur électrique économique à fabriquer.

L'invention est exposée dans le jeu de revendications joint.

D'autres buts et aspects avantageux de l'invention apparaîtront à la lecture des revendications et/ou de la description détaillée ci-après de formes d'exécution de l'invention en relation avec les figures, dans lesquelles :

La Fig. 1a est une vue en perspective d'une première forme d'exécution d'un moteur électrique (illustré sans boîtier) selon l'invention ;
La Fig. 1b est une vue de dessus du moteur de la figure 1a;
Les Fig. 1c et 1d sont des vues en coupe selon les lignes Ic-Ic et Id-Id de la figure 1b respectivement;
La Fig. 1e est une vue en perspective de la première forme d'exécution illustré sans boîtier) et sans rotor;
La Fig. 1f est une vue en perspective en détail d'une partie de la Fig. 1e ;
La Fig. 2a est une vue en perspective d'une deuxième forme d'exécution d'un moteur électrique (illustré sans boîtier) selon l'invention ;
La Fig. 2b est une vue de dessus du moteur de la figure 2a;
Les Fig. 2c et 2d sont des vues en coupe selon les lignes IIc-IIc et IId-IId de la figure 2b respectivement;
La Fig. 3a est une vue en perspective d'une troisième forme d'exécution d'un moteur électrique (illustré sans boîtier) selon l'invention ;
La Fig. 3b est une vue de dessus du moteur de la figure 3a;
Les Fig. 3c et 3d sont des vues en coupe selon les lignes IIIc-IIIc et IIId-IIId de la figure 3b respectivement;

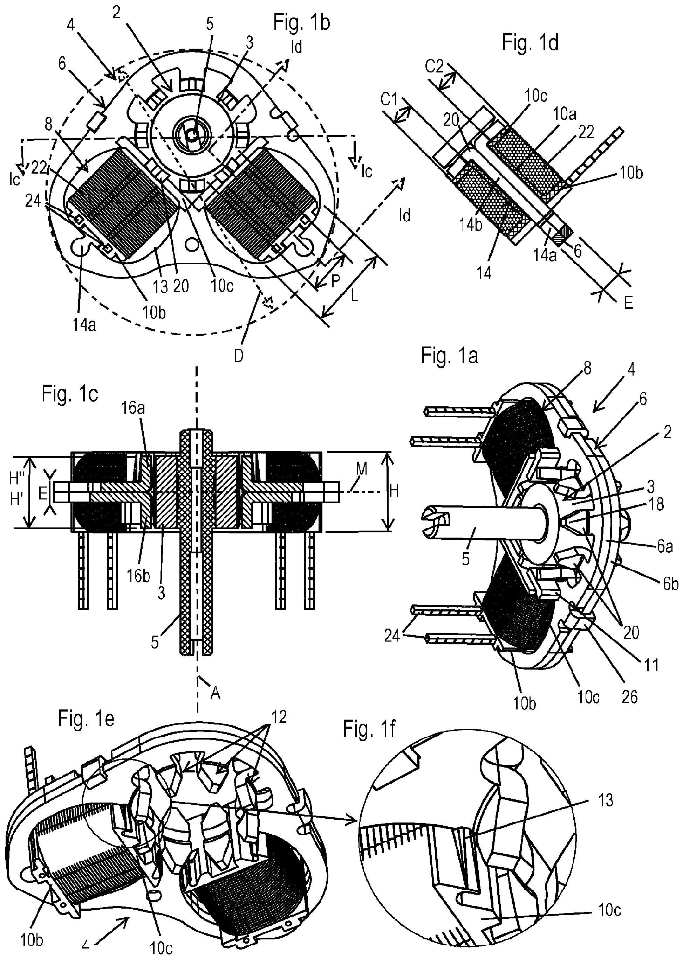

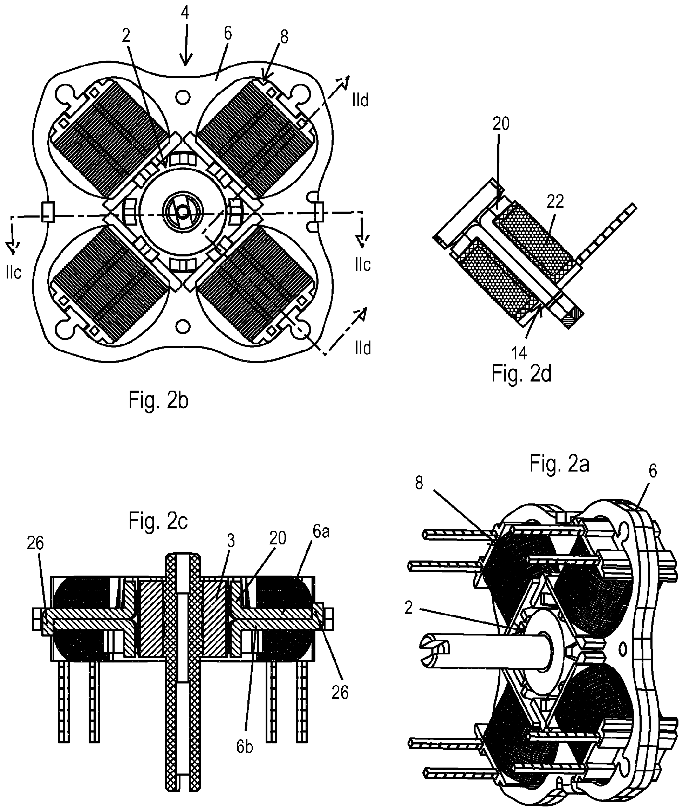

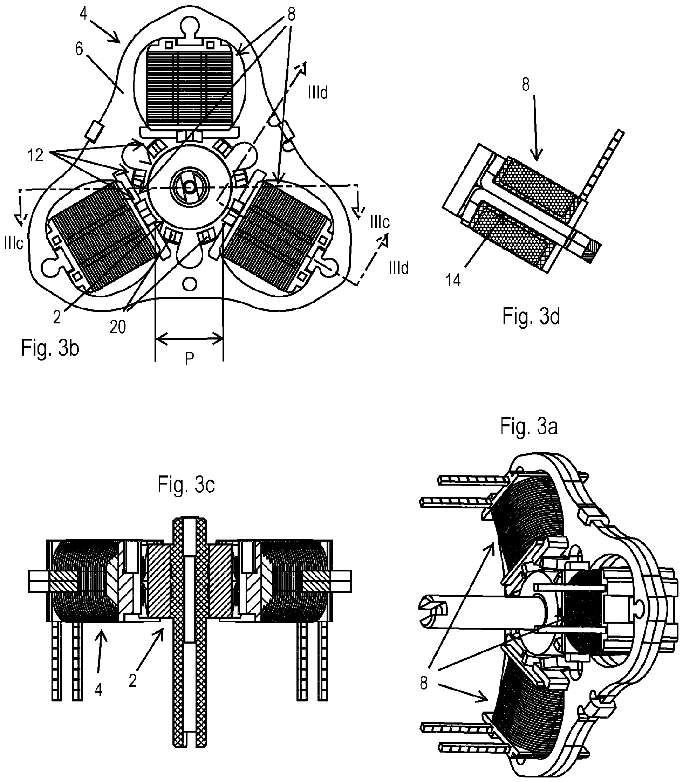

Faisant référence aux figures, un moteur électrique, selon différentes formes d'exécution de l'invention, comprend un rotor 2 et un stator 4 comprenant des bobines 8 et une armature magnétique 6. Le rotor comprend une partie aimantée 3 définissant une pluralité de pôles de rotor. Le rotor tourne autour d'un axe définissant une direction axiale A. Les figures 1a-1f illustrent un moteur à deux phases comprenant deux bobines et huit pôles magnétiques au stator. Les figures 2a-2d illustrent un moteur à deux phases comprenant quatre bobines et huit (quatre paires) de pôles magnétiques au stator. Cette forme d'exécution est très avantageuse puisque d'une part elle offre des performances accrues par rapport au stator avec deux bobines et, dans le cas d'une solution à tôles découpées et pliées, elle offre plus de place pour la découpe des pôles de l'armature magnétique. Les figures 3a-3d illustrent un moteur à trois phases comprenant trois bobines et neuf pôles magnétiques au stator. Les désignations apparaissant sur les figures 1a à 1d sont aussi applicables aux caractéristiques correspondantes des figures 2a à 2d et 3a à 3d.

La partie aimantée du rotor peut comporter un aimant axial couplé à un corps en un matériau magnétique comprenant des dents formant des pôles. Par matériau magnétique on entend un matériau ayant une grande perméabilité magnétique tel qu'un fer doux, une ferrite, ou d'autres matériaux utilisés pour les circuits magnétiques des moteurs ou transducteurs électromagnétiques.

Dans une variante, la partie aimantée du rotor peut être sous forme d'un aimant bague avec des secteurs circonférentielles aimantés de manière alternée Nord/Sud, ou encore d'une bague sur laquelle des aimants sont rapportés, par exemple des aimants en NdFeB frittés.

Le stator comprend une pluralité de pôles de stator 12 qui peut être de nombre égal ou différent du nombre de pôles du rotor. Les pôles peuvent former des paires de pôles magnétiques. Dans une forme d'exécution avantageuse, le nombre de pôles magnétiques du stator est supérieur au nombre de pôles magnétiques du rotor. Par exemple, le nombre de paires de pôles du rotor peut être 3 ou 5 et le nombre de pôles du stator peut être 8 ou 9. Pour des moteurs de petites tailles, 3 paires de pôles au rotor donnent de manière surprenante des résultats meilleurs que 5 paires de pôles au rotor. L'armature magnétique 6 du stator peut avantageusement avoir une forme généralement plate, le plan majeur $M$ de la forme plate orienté essentiellement perpendiculaire à l'axe de rotation A. La périphérie de la forme plate peut constituer un circuit magnétique fermé entourant les bobines et la partie aimantée du rotor.

Dans une forme d'exécution avantageuse, l'armature magnétique comprend plusieurs parties assemblées, comportant au moins une première partie 6a et une deuxième partie 6b. Les premières et deuxièmes parties peuvent avantageusement être fabriquées de tôles estampées. Dans les formes d'exécution illustrées, les deux parties 6a, 6b sont de forme identique, configurées pour être assemblées orientées en opposition, cela permettant de réduire l'outillage et les coûts de fabrication. Des languettes pliées 26 reçues dans des creux complémentaires sur les bords extérieurs des tôles permettent de positionner et/ou fixer les tôles ensemble. Dans des variantes, d'autres procédés connus en soi pour positionner et fixer les tôles entre elles peuvent être utilisés, par exemple par agrafage, semi-découpage, collage, ou soudage. Le stator comprend des dents 20 distribués circonférentiellement autour du rotor et séparés de la surface du rotor par un entrefer. Les dents définissent les pôles magnétiques 12 du stator. Certaines dents sont couplées directement aux bobines, et d'autres sont couplés indirectement par le circuit magnétique formé par l'armature magnétique 6.

Chaque bobine 8 comprend un support de bobine 10, par exemple en en matériau diélectrique tel que du plastique moulé ou injecté, avec une partie centrale creuse 10a bordée d'un premier flasque 10b à une extrémité et un deuxième flasque 10c à l'autre extrémité. Un fil conducteur 22 (en cuivre ou un autre matériau conducteur) est bobiné sur la partie centrale creuse entre les flasques et connecté à ses extrémités à des bornes électriques 24, par exemple sous forme de pins, assemblés au support, par exemple par surmoulage dans l'un des flasques. Les flasques 10b, 10c du support de bobine 10 peuvent avantageusement aussi servir de guidage, positionnement et/ou de fixation de la bobine 8 sur l'armature magnétique 6. Dans les formes d'exécution illustrées, la bobine assemblée avec son noyau magnétique est avantageusement insérée axialement dans un évidement 13 de l'armature magnétique 6. Dans une variante avantageuse, le support de bobine 10, ou une partie du support de bobine, peut être surmoulé sur le noyau, avec ou sans les bornes de connexion électrique.

Le flasque 10c comprend une butée de positionnement axiale 11 qui s'appuie contre l'armature en position assemblée. Les bords des flaques peuvent aussi constituer des rails axiales et/ou radiales coopérant avec des parties de bord de l'évidement 13 pour le positionnement dans le plan radial de la bobine (le plan radial étant orthogonale à la direction axiale A). Le flasque 10c assure donc le positionnement axial, via une butée et, dans certaines réalisations, peut aussi comprendre un clip de verrouillage ou de maintien. Le flasque 10c peut avantageusement aussi assurer un positionnement dans la direction radial afin de garantir la bonne position angulaire du pôle, vis-à-vis de l'aimant du rotor. L'ensemble de ces fonctions assure en outre une meilleure résistance mécanique, notamment aux vibrations et chocs.

Le circuit magnétique du stator comprend en outre un noyau de bobine 14, sous forme d'une pièce rapportée en un matériau magnétique, inséré dans le centre de chaque bobine, notamment inséré dans la partie centrale creuse du support de bobine. Le noyau de bobine 14 comprend une partie de fixation 14a, une partie centrale 14b, et une partie de pôle qui constitue une dent 20 formant un pôle du stator. La partie de fixation 14a est configurée pour être ancrée à l'armature 6, par exemple par soudage, par rivetage, par chassage ou par d'autres moyens mécaniques pour établir une connexion magnétique et une fixation mécanique avec l'armature. La provision du noyau de bobine en tant que pièce rapportée permet avantageusement d'insérer le noyau de bobine dans la bobine 10 avant l'assemblage de la bobine dans l'armature 6. Cela permet d'avoir une bobine de plus grande dimension (circonférence / diamètre / hauteur / largueur) que dans une configuration où la bobine devrait être enfilée sur un noyau intégralement formé avec l'armature magnétique. Le noyau de bobine 14 peut être formé du même matériau et par le même procédé de fabrication que ceux utilisés pour l'armature, par exemple par estampage de tôles. Dans ce dernier exemple, le noyau peut même être formé et découpé de la pièce de tôle formant l'armature, cela permettant de réduire les chutes de matériau et les coûts de l'outillage.

Dans des variantes, le noyau de bobine peut toutefois aussi être formé d'un matériau différent ou par un procédé de fabrication différent que ceux utilisés pour l'armature magnétique.

Dans les formes d'exécution illustrées, des dents 20 sont avantageusement formées solidairement et intégralement avec les tôles estampées de l'armature magnétique 6.

Chaque dent comprend une extension axiale 16a, 16b s'étendant dans la direction axiale de part et d'autre d'un plan médian définissant l'interface entre les deux parties 6a, 6b de l'armature. Dans le cas où l'armature est fabriquée de tôles estampées, les extensions 16a projetant d'un côté sont pliées et s'étendent axialement d'une des parties 6a de l'armature et les extensions 16b projetant de l'autre côté sont pliées et s'étendent axialement de l'autre des parties 6b de l'armature. Cela permet avantageusement d'obtenir un moteur compact et performant tout en étant économe à fabriquer.

L'extrémité libre 18 de chaque dent 20 peut avoir une forme à section réduite, par exemple un chanfrein, cela permettant avantageusement d'avoir une hauteur $H'$ de dent identique ou similaire à la hauteur $H$ des bobines tout en estampant les dents de la partie de tôle dans la zone du rotor. La hauteur $H'$ des dents est supérieure à l'épaisseur $E$ de la partie principale de l'armature magnétique et correspond essentiellement à la hauteur $H$ des bobines ainsi que la hauteur des pôles magnétiques du rotor. Dans des formes d'exécution avantageuses, le ratio de la hauteur $H'$ d'une dent par rapport à l'épaisseur $E$ de la partie principale de l'armature magnétique est plus grand que trois : rapport $H'/E > 3$.

Les bobines sont aussi grandes que la hauteur $H''$ de la partie aimantée du rotor le permet et le couplage magnétique entre le stator et rotor est optimisé en ayant des dents de stator de hauteur axiale aussi grand que la partie aimantée du rotor. Selon un aspect de l'invention, la hauteur axiale de la section de la bobine remplie de fil conducteur, *C1* plus *C2*, est plus grand que deux fois l'épaisseur axiale *E* du noyau de la bobine : $C1 + C2 > 2*E$. Cette configuration permet d'obtenir une grande densité de couple moteur avec un moteur de faible hauteur (dans la direction axiale A).

Dans des formes d'exécution avantageuses, le ratio du diamètre *D* du cercle circonscrit du circuit magnétique par rapport à la hauteur *H"* de la partie aimanté est plus grand que trois : $D/H'' > 3$. Dans certaines variantes, pour des raisons autres que la production de couple, par exemple pour une fonction capteur, il peut être nécessaire de prolonger la longueur axiale de l'aimant rotor, et dans ce cas, ce sont les rapports *D/H* et/ou *D/H'* qui peuvent être plus grand que trois.

Selon un aspect de l'invention, la largeur *L* de bobinage (direction tangentielle à l'entrefer) est supérieure à la distance *P* entre deux pôles adjacents. Le pôle magnétique est donc rapporté et le volume de fil conducteur (volume de « cuivre ») est maximisé.

*Liste des références dans les figures*

Moteur

 Rotor 2

  Pôles
  Aimant 3
  Axe 5

 Stator 4

  Pôles 12
  Armature magnétique 6

   Première partie 6a
   Deuxième partie 6b
   Languette 26
   Dents 20
   Extensions axiales 16a, 16b
   Extrémités libres 18
   Evidement 13
   Noyau de bobine 14 (rapporté)

    Partie de fixation 14a Partie centrale 14b Partie de pôle → Dent 20

  Bobine 8

  Support de bobine 10

   Partie centrale creuse 10a
   Premier flasque 10b
   Deuxième flasque 10c

    Butée de positionnement axial 11

    Clip de verrouillage 13

   Fil conducteur 22
   Bornes électriques 24

Direction axiale *A*
Hauteur axiale de la bobine *H*
Hauteur axiale de la partie aimanté du rotor *H"*
Hauteur axiale du cuivre *C1, C2*
Hauteur axiale des dents *H'*
Largueur de la bobine *L*
Distance entre pôles *P*
Epaisseur axiale du noyau magnétique de la bobine *E*
Diamètre du cercle circonscrit du circuit magnétique du stator *D*

**Revendications**

1.   Moteur électrique comprenant un rotor (2) comprenant une partie aimantée (3) définissant une pluralité de pôles de rotor, et un stator (4) comprenant une pluralité de bobines (8) et une armature magnétique (6) définissant un circuit magnétique, chaque bobine comprenant un noyau de bobine (14), sous forme d'une pièce rapportée en un matériau magnétique fixé à l'armature magnétique, le noyau de bobine comprenant une dent (20) définissant un pôle magnétique du stator, l'armature magnétique ainsi que le noyau de bobine étant formés et découpés de tôle, un plan majeur (*M*) des tôles étant perpendiculaire à l'axe de rotation (*A)* du rotor, **caractérisé en ce que** la dent comporte des extensions (16a, 16b) s'étendant dans une direction axiale, les extensions de la dent étant pliées orthogonalement de part et d'autre du plan majeur (M), et une hauteur (H') de la dent et une hauteur (H) de la bobine étant substantiellement identiques à une hauteur (H") de la partie aimantée du rotor.

2.   Moteur électrique selon la revendication précédente, **caractérisé en ce que** des extrémités libres de la dent ont une largeur réduite par rapport à une partie centrale de la dent.

3.   Moteur électrique selon l'une des deux revendications précédentes, **caractérisé en ce que** l'armature magnétique comprend deux tôles identiques assemblées en opposition l'une de l'autre.

4.   Moteur selon l'une quelconque des revendications précédentes, **caractérisé en ce que** chaque bobine comprend un support de bobine (10) avec une partie centrale creuse (10a) bordée d'une première flasque (10b) à une extrémité et une deuxième flasque (10c) à l'autre extrémité, la bobine étant assemblée avec son noyau magnétique axialement dans un évidement (13) de l'armature magnétique, les flasques (10b, 10c) coopérant avec des parties de bord de l'évidement (13) pour le positionnement de la bobine dans la direction axiale et dans un plan orthogonal à la direction axiale, dans l'armature magnétique.

5. Moteur selon l'une quelconque des revendications précédentes, **caractérisé en ce que** le ratio du diamètre D d'un cercle circonscrit du circuit magnétique par rapport à la hauteur H" de la partie aimanté est plus grand que trois : $D/H'' > 3$.

6. Moteur selon l'une quelconque des revendications précédentes, **caractérisé en ce que** le ratio de la hauteur $H'$ des dents par rapport à l'épaisseur $E$ de la partie principale de l'armature magnétique est plus grand que trois : $H'/E > 3$.

7. Moteur selon l'une des revendications précédentes, **caractérisé en ce que** le moteur a deux phases et comprend deux bobines et huit pôles magnétiques au stator.

8. Moteur selon l'une des revendications 1 à 6, **caractérisé en ce que** le moteur a deux phases et comprend quatre bobines et huit pôles magnétiques au stator.

9. Moteur selon l'une des revendications 1 à 6, **caractérisé en ce que** le moteur a trois phases et comprend trois bobines et neuf pôles magnétiques au stator.

10. Moteur selon l'une des revendications précédentes, **caractérisé en ce que** le nombre de pôles magnétiques du stator est supérieur au nombre de pôles magnétiques du rotor.

11. Moteur selon la revendication précédente, **caractérisé en ce que** le nombre de paires de pôles magnétiques du rotor est trois.

12. Moteur selon l'une des revendications précédentes, **caractérisé en ce que** une distance ($P$) entre pôles de bobines adjacentes est inférieure à une largueur ($L$) maximale de la bobine.

13. Moteur selon l'une des revendications précédentes, **caractérisé en ce que** le noyau de bobine (14) et des bornes électriques (24) sont surmoulés avec un support de bobine (10).

**Patentansprüche**

1. Elektromotor, umfassend einen Rotor (2), umfassend einen magnetisierten Teil (3), der eine Vielzahl von Rotorpolen definiert, und einen Stator (4), umfassend eine Vielzahl von Spulen (8) und eine magnetische Armierung (6), die einen Magnetkreis definiert, wobei jede Spule einen Spulenkern (14) in Form eines Einsatzteils aus einem magnetischen Material umfasst, der an der magnetischen Armierung befestigt ist, wobei der Spulenkern einen Zahn (20) umfasst, der einen magnetischen Pol des Stators definiert, wobei die magnetische Armierung sowie der Spulenkern aus Blech geformt und zugeschnitten sind, wobei eine Hauptebene ($M$) der Bleche senkrecht zur Rotationsachse (A) des Rotors ist, **dadurch gekennzeichnet, dass** der Zahn Erweiterungen (16a, 16b) aufweist, die sich in einer axialen Richtung erstrecken, wobei die Erweiterungen des Zahns beiderseits der Hauptebene ($M$) orthogonal gebogen sind, und eine Höhe ($H'$) des Zahns und eine Höhe ($H$) der Spule mit einer Höhe ($H''$) des magnetisierten Teils des Rotors substantiell identisch ist.

2. Elektromotor nach vorangehendem Anspruch, **dadurch gekennzeichnet, dass** freie Enden des Zahns eine in Bezug auf einen zentralen Teil des Zahns reduzierte Breite haben.

3. Elektromotor nach einem der zwei vorangehenden Ansprüche, **dadurch gekennzeichnet, dass** die magnetische Armierung zwei identische Bleche umfasst, die einander gegenüberliegend verbunden sind.

4. Motor nach einem der vorangehenden Ansprüche, **dadurch gekennzeichnet, dass** jede Spule einen Spulenhalter (10) mit einem hohlen zentralen Teil (10a), gesäumt von einem ersten Flansch (10b) an einem Ende und einem zweiten Flansch (10c) am anderen Ende, umfasst, wobei die Spule mit ihrem Magnetkern in einer Aussparung (13) der magnetischen Armierung axial verbunden ist, wobei die Flansche (10b, 10c) mit Randteilen der Aussparung (13) für die Positionierung der Spule in der axialen Richtung und in einer zur axialen Richtung orthogonalen Ebene in der magnetischen Armierung zusammenwirken.

5. Motor nach einem der vorangehenden Ansprüche, **dadurch gekennzeichnet, dass** das Verhältnis des Durchmessers D eines Umkreises des Magnetkreises zur Höhe H" des magnetisierten Teils größer als drei ist:

$$D/H'' > 3.$$

6. Motor nach einem der vorangehenden Ansprüche, **dadurch gekennzeichnet, dass** das Verhältnis der Höhe $H'$ der Zähne zur Stärke $E$ des Hauptteils der magnetischen Armierung größer als drei ist:

$$H'/E > 3.$$

7. Motor nach einem der vorangehenden Ansprüche, **dadurch gekennzeichnet, dass** der Motor zwei Phasen hat und zwei Spulen und acht Magnetpole am Stator umfasst.

8. Motor nach einem der Ansprüche 1 bis 6, **dadurch gekennzeichnet, dass** der Motor zwei Phasen hat und vier Spulen und acht Magnetpole am Stator umfasst.

9. Motor nach einem der Ansprüche 1 bis 6, **dadurch gekennzeichnet, dass** der Motor drei Phasen hat und drei Spulen und neun Magnetpole am Stator umfasst.

10. Motor nach einem der vorangehenden Ansprüche, **dadurch gekennzeichnet, dass** die Anzahl der Magnetpole des Stators höher als die Anzahl der Magnetpole des Rotors ist.

11. Motor nach vorangehendem Anspruch, **dadurch gekennzeichnet, dass** die Anzahl der Magnetpolpaare des Rotors drei ist.

12. Motor nach einem der vorangehenden Ansprüche, **dadurch gekennzeichnet, dass** ein Abstand (*P*) zwischen Polen benachbarter Spulen kleiner als eine maximale Breite (*L*) der Spule ist.

13. Motor nach einem der vorangehenden Ansprüche, **dadurch gekennzeichnet, dass** der Spulenkern (14) und elektrische Klemmen (24) mit einem Spulenhalter (10) überformt sind.

**Claims**

1. An electric motor comprising a rotor (2) comprising a magnetized portion (3) defining a plurality of rotor poles, and a stator (4) comprising a plurality of coils (8) and a magnetic armature (6) defining a magnetic circuit, each coil comprising a coil core (14), in the form of an insert made of a magnetic material fixed to the magnetic armature, the coil core comprising a tooth (20) defining a magnetic pole of the stator, the magnetic armature as well as the coil core being formed and cut out of sheet metals, a major plane (*M*) of the sheet metals being perpendicular to the axis of rotation (*A*) of the rotor, **characterized in that** the tooth includes extensions (16a, 16b) extending in an axial direction, the extensions of the tooth being bent orthogonally on either side of the major plane (*M*), and a height (*H'*) of the tooth and a height (*H*) of the coil being substantially identical to a height (*H"*) of the magnetized portion of the rotor.

2. The electric motor according to the preceding claim, **characterized in that** free ends of the tooth have a reduced width relative to a central portion of the tooth.

3. The electric motor according to any one of the two preceding claims, **characterized in that** the magnetic armature comprises two identical sheet metals assembled opposite each other.

4. The electric motor according to any one of the preceding claims, **characterized in that** each coil comprises a coil support (10) with a hollow central portion (10a) bordered by a first flange (10b) at one end and a second flange (10c) at the other end, the coil being assembled with its magnetic core axially in a recess (13) of the magnetic armature, the flanges (10b, 10c) cooperating with edge portions of the recess (13) for the positioning of the coil in the axial direction and in a plane orthogonal to the axial direction, in the magnetic armature.

5. The electric motor according to any one of the preceding claims, **characterized in that** the ratio of the diameter D of a circumscribed circle of the magnetic circuit relative to the height H" of the magnetized portion is greater than three: *D/H"* > 3.

6. The electric motor according to any one of the preceding claims, **characterized in that** the ratio of the height *H'* of the teeth relative to the thickness *E* of the main portion of the magnetic armature is greater than three: *H'/E* > 3.

7. The electric motor according to any one of the preceding claims, **characterized in that** the motor has two phases and comprises two coils and eight magnetic poles on the stator.

8. The electric motor according to any one of claims 1 to 6, **characterized in that** the motor has two phases and comprises four coils and eight magnetic poles on the stator.

9. The electric motor according to any one of claims 1 to 6, **characterized in that** the motor has three phases and comprises three coils and nine magnetic poles on the stator.

10. The electric motor according to any one of the preceding claims, **characterized in that** the number of magnetic poles of the stator is greater than the number of magnetic poles of the rotor.

11. The electric motor according to the preceding claim, **characterized in that** the number of pairs of magnetic poles of the rotor is three.

12. The electric motor according to any one of the preceding claims, **characterized in that** a distance (*P*) between poles of adjacent coils is less than a maximum width (*L*) of the coil.

13. The electric motor according to any one of the preceding claims, **characterized in that** the coil core (14) and the electrical terminals (24) are overmolded with a coil support (10) .

Fig. 1b

Fig. 1d

Fig. 1a

Fig. 1c

Fig. 1e

Fig. 1f

Fig. 2b

Fig. 2d

Fig. 2c

Fig. 2a

Fig. 3b

Fig. 3d

Fig. 3c

Fig. 3a

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5708406 A
- US 8084913 B
- EP 1482626 A
- US 20100314962 A
- US 20090001824 A
- US 20020135243 A
- JP 2002315295 A
- JP 2011223776 A